# EUROPÄISCHE PATENTANMELDUNG

(11) **EP 1 453 246 A1**
(43) Veröffentlichungstag der Anmeldung: **01.09.2004**
(21) Anmeldenummer: 03004591.8
(22) Anmeldetag: 01.03.2003
(51) Int. Cl.: H04L 12/28, H04L 12/56

(54) **Verfahren und Basisstation zur Übertragung von Informationen in einem mittels Ad Hoc Verbindungen erweiterten zellularen Funkkommunikationssystem**

(71) Anmelder: SIEMENS AKTIENGESELLSCHAFT, 80333 München (DE)
(72) Erfinder: Gruber, Ingo, 80225 Gilching (DE); Hui, Li, Dr., 90489 Nürnberg (DE)

(57) **Zusammenfassung**

Die Erfindung betrifft ein Verfahren zur Übertragung von Informationen in einem Funkkommunikationssystem umfassend zumindest einen zellularen Funknetzteil (CELL) mit mindestens einer Basisstation (BS) und einen zumindest teilweise selbstorganisierenden Funknetzteil (ADHOC), wobei die Informationen von einer Teilnehmerstation (N1) des selbstorganisierenden Funknetzteils an die mindestens eine Basisstation (BS) des zellularen Funknetzteils (CELL) übertragen werden. Erfindungsgemäß werden in der mindestens einen Basisstation (BS) Verbindungsinformationen über den selbstorganisierenden Funknetzteil (ADHOC) zur Bestimmung mindestens eines Übertragungspfades zur Übertragung von Informationen verwendet.

## Beschreibung

Verfahren und Basisstation zur Übertragung von Informationen in einem mittels Ad Hoc Verbindungen erweiterten zellularen Funkkommunikationssystem

Die Erfindung betrifft ein Verfahren zur Übertragung von Informationen in einem Funkkommunikationssystem umfassend zumindest ein zellulares Funknetzteil mit mindestens einer Basisstation und ein zumindest teilweise selbstorganisierendes Funknetzteil nach dem Oberbegriff des Anspruchs 1.

Die Erfindung betrifft ferner eine Basisstation in einem Funkkommunikationssystem umfassend zumindest einen zellularen Funknetzteil mit mindestens der Basisstation und einen zumindest teilweise selbstorganisierenden Funknetzteil nach dem Oberbegriff des Anspruchs 11.

Funkkommunikationssystemen kommt heute aufgrund der ermöglichten Mobilität der Teilnehmer eine große Bedeutung zu. Außerdem werden Geräte entwickelt, die unterschiedliche Systeme nutzen können (Multi Homing) und somit die Flexibilität erhöhen.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS. (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen der zweiten und/oder dritten Generation können Informationen kanalvermittelt (CS Circuit Switched) oder paketvermittelt (PS Packet Switched) übertragen werden.

Die Verbindung zwischen den einzelnen Stationen erfolgt über eine Funkkommunikations-Schnittstelle. Basisstation und Funknetzwerkkontrolleinrichtung sind üblicherweise Bestandteile eines Basisstationssubsystems (RNS Radio Network Subsystem). Ein zellulares Funkkommunikationssystem umfasst in der Regel mehrere Basisstationssubsysteme, die an ein Kernnetz (CN Core Network) angeschlossen sind. Dabei ist die Funknetzwerkkontrolleinrichtung des Basisstationssubsystems in der Regel mit einer Zugangseinrichtung des Kernnetzes verbunden.

Neben diesen hierarchisch organisierten zellularen Funkkommunikationssystemen gewinnen selbstorganisierende drahtlose Funkkommunikationssysteme - auch als Ad Hoc Systeme bezeichnet - zunehmend an Bedeutung, auch in Verbindung mit zellularen Funkkommunikationssystemen.

In selbstorganisierenden Funkkommunikationssystemen findet im Gegensatz zu zellularen Funkkommunikationssystemen, wie z.B. GSM oder UMTS, die Kommunikation zumindest teilweise direkt zwischen den möglicherweise mobilen Endgeräten statt.

In selbstorganisierenden Funkkommunikationssystemen sind Funkstationen in der Lage, ohne eine vermittelnde zentrale Einrichtung eine Funkverbindung untereinander aufzubauen. Die Verbindung zwischen zwei Funkstationen erfolgt dabei entweder direkt oder bei größeren Entfernungen über weitere Funkstationen, die für diese Verbindung Relaisstationen bilden. Nutzinformationen werden somit von Funkstation zu Funkstation über Abstände gesendet, welche der Funkreichweite der Funkstationen entsprechen. Die Funkstationen eines selbstorganisierenden Netzes können mobile Funkstationen (beispielsweise Mobilfunkgeräte von Personen oder in Verkehrsfahrzeugen) und/oder vorwiegend stationäre Funkstationen (beispielsweise Computer, Drucker, Haushaltsgeräte) sein. Um Bestandteil eines Ad Hoc Netzes zu sein, muss sich eine Funkstation in dem Funkabdeckungsbereich von zumindest einer benachbarten Funkstation befinden. Beispiele für selbstorganisierende Netze sind die Wireless Local Area Networks (WLANs) wie HiperLAN oder IEEE 802.11.

Ein besonderer Vorteil von selbstorganisierenden Funkkommunikationssystemen liegt in ihrer großen Mobilität und Flexibilität. Diese Faktoren stellen jedoch auch eine große Herausforderung für Routing Verfahren dar. In einem aus mehreren Funkstationen bestehenden Funkkommunikationssystem muss für ein Datenpaket ein Pfad von dem Sender gegebenenfalls über mehrere das Datenpaket weiterleitende Funkstationen zu dem Empfänger gefunden werden. Die Auswahl des Weges bezeichnet man als Routing. Handelt es sich bei den Funkstationen um mobile Funkstationen, so ändert sich in der Regel die Topologie des Netzwerkes mit der Zeit. Ein geeignetes Routing Verfahren muss diesen ständigen Veränderungen Rechnung tragen.

Hybride Funkkommunikationssysteme umfassen zumindest einen zellularen Funknetzteil mit mindestens einer Basisstation und einen zumindest teilweise selbstorganisierenden Funknetzteil, wobei Informationen von einer Teilnehmerstation des selbstorganisierenden Funknetzteils an die Basisstation des zellularen Funknetzteils unter Nutzung beider Teilnetze übertragen werden können.

Die Anbindung von selbstorganisierenden Funkkommunikationssystemen an zellulare Funkkommunikationssysteme wird aus verschiedenen Gründen angestrebt. Dies soll anhand der nachfolgenden beispielhaften Betrachtungen verdeutlicht werden. Dabei wird als Beispiel für ein zellulares Funkkommunikationssystem ein UMTS Funknetz betrachtet. Grundsätzlich können, müssen aber einerseits für den zellularen Funknetzteil mit mindestens einer Basisstation und andererseits für den zumindest teilweise selbstorganisierenden Funknetzteil keine unterschiedlichen Übertragungstechniken zum Einsatz kommen.

Ein grundlegendes Problem bei der Übertragung von Informationen von einer nicht im zellularen Funkteilnetz eingebundenen Teilnehmerstation des selbstorganisierenden Funknetzteils an die Basisstation des zellularen Funknetzteils stellt die Pfadbestimmung für den zu verwendenden Übertragungspfad dar.

Bei dem Aufbau eines UMTS Netzwerkes werden zu Beginn nur in den Innenstädten von Ballungszentren UMTS Basisstationen existieren. Diese Basisstationen haben nur eine begrenzte Reichweite und können nur die Teilnehmer in der unmittelbaren Umgebung mit den neuen Diensten von UMTS versorgen. Sobald der Teilnehmer die Reichweite des Senders verlässt, muss er beispielsweise auf den GSM-Standard umgestellt werden. Nur Teilnehmer die innerhalb der Reichweite des UMTS Senders sind, erhalten eine Verbindung mit der Basisstation, Teilnehmer außerhalb dieses Bereichs bekommen keine Verbindung über UMTS. Um die Häufigkeit einer Ablehnung einer Verbindung in der Nähe eines UMTS Senders zu verringern, kann ein selbstkonfigurierendes ad hoc Netz genutzt werden. Dieses dient als Relay Netz von einem mobilen Terminal zu einem Terminal innerhalb der Reichweite des UMTS Senders. Über diese Relay-Terminals kann nun eine indirekte Verbindung mit UMTS Diensten aufgebaut werden.

Im Falle eines Komplettausbaus eines UMTS Netzes kann eine Anbindung eines selbstorganisierenden Funknetzes verwendet werden. Dann wird nicht mehr von dem Fall auszugehen sein, dass keine direkte Verbindung zu einer UMTS Basisstation existiert, sondern in diesem Szenario tritt beispielsweise eine Überlast einer einzelnen UMTS Basisstation auf. Dies kann z.B. auf großen Messen geschehen, wenn viele Nutzer gleichzeitig über die gleiche UMTS Basisstation telefonieren wollen. Nun kann der Algorithmus genutzt werden, um einige der geblockten Nutzer über das Ad Hoc Netzwerk und eine Relaisstation mit einer anderen Basisstation zu verbinden. Dadurch kann die Blockierungswahrscheinlichkeit von Rufen reduziert werden, und infolgedessen hat der Netzbetreiber beim Aufbau seines UMTS Netzes mehr Freiheiten bezüglich des Abstandes zwischen zwei Basisstationen.

Die maximale Entfernung zwischen der UMTS Basisstation und einem mobilen Endgerät ist nicht konstant, sondern variiert. Man spricht in diesem Zusammenhang von Zellatmung. Dies wird verursacht durch einen erhöhten Störpegel von anderen Endgeräten innerhalb der Reichweite der Basisstation. Je größer die Anzahl der Teilnehmer ist, umso geringer wird die maximale Distanz. Diesem Effekt kann man ebenfalls durch Anbindung eines selbstorganisierenden Funkkommunikationssystems begegnen.

Als ein Ad Hoc Multihop Protokoll ist das ODMA (Opportunity Driven Multiple Acess) vorgeschlagen worden und in einer veränderten Form von einer Konzeptgruppe des 3rd Generation Partnership Project (3GPP) aufgegriffen worden.

Eine UMTS Zelle wird in einen Bereich mit hoher möglicher Bitrate (wenig Interferenz) um die Basisstation herum und in einem Bereich mit niedriger Bitrate (hohe Interferenz) weiter entfernt von der Basisstation unterteilt. UMTS kann nur eine gewisse Anzahl von Teilnehmern gleichzeitig versorgen. Dabei ist die Größe der Interferenzen ausschlaggebend, weil alle Teilnehmer das gleiche Frequenzband verwenden und nur durch unterschiedliche Codesequenzen voneinander getrennt werden können. Weit von der Basisstation entfernte Teilnehmer müssen mit hoher Sendeleistung senden, was zu einer hohen Interferenz führt. Falls die Interferenzen zu groß werden, kann keine Verbindung zur Basisstation aufgebaut werden. Dieses Verhalten soll ODMA vermeiden, indem Verbindungen von entfernten Teilnehmern nicht direkt' zur Basisstation weitergeleitet werden, sondern von einem dazwischenliegenden Wiederholstation (Relay) weitergeleitet wird. Dies reduziert die gesamte im System vorhandene Menge an Interferenzen, weil der Teilnehmer nicht mit voller Leistung senden muss. ODMA benötigt für den Betrieb allerdings zumindest Layer 1 Synchronisierungsinformationen, d.h. Teilnehmer außerhalb der maximalen Sendereichweite der Basisstation können an ODMA nicht partizipieren. Die 3GPP Spezifikation sieht sowohl den Einsatz von mobilen Relays (Teilnehmer) als auch stationärer Relays (Infrastruktur) vor.

ODMA basiert auf dem Einsatz von Erforschungs-Nachrichten (Probing), also einem in regelmäßigen Abständen Senden von Nachrichten, um Teilnehmer in der Nachbarschaft zu finden. Anhand dieser Informationen kann der Teilnehmer eine Routing-Tabelle aufbauen, die bei einem späteren Verbindungsaufbau zur Basisstation genutzt werden kann. Jeder Teilnehmer entscheidet selbstständig über sein Probing-Verhalten.

Durch das Probing erhält jeder Teilnehmer Informationen seiner Nachbarn bezüglich möglicher Datenraten und benötigter Sendeleistung. Die Datenrate kann durch den gewählten Kontrollkanal (Control Channel CCH) festgelegt werden. Das Endgerät startet die Suche mit einer minimalen Sendefeldstärke, und falls sich keine Empfangsgeräte bei ihm melden, erhöht die Sendestärke sukzessiv, bis genügend Antworten eintreffen. Dadurch wird ein Netz aus Teilnehmern mit derselben Datenrate aufgebaut. Es wird ein proaktives Routing angestrebt. Jeder Teilnehmer bekommt von seinen Nachbarn dessen Nachbarschaftsinformationen mitgeteilt. Daraus lassen sich dann Pfade zurück zur Basisstation berechnen. Allerdings wird auf die Problematik der hohen Dynamik (schnell bewegende Teilnehmer) und der damit verbundenen schnellen Änderung der Netztopologie nicht eingegangen. Diese führt vor allem bei proaktiven Routing Algorithmen zu hohen Netzlasten durch den Austausch von Topologieinformationen.

Nachteilig ist, dass ODMA zwar im TDD-Modus mit einem Software Update der Basisstation und der Teilnehmer auskommen kann, dass aber für den FDD-Modus eine Hardwaremodifikation der Basisstation und der Teilnehmer notwendig ist, weil auch ein Empfangen auf dem eigentlich zum Senden vorgesehen Band erforderlich ist (Empfang der Probing-Nachrichten anderer Teilnehmer). Sowohl das Probing mit unterschiedlichen Sendestärken als auch das Filtern der eintreffenden Nachrichten führt folglich gerade im FDD-Modus zu einem höheren apparativen Aufwand in den Endgeräten und damit auch zu einer Verteuerung der Endgeräte.

Es existieren außerdem verschiedene Ansätze zum Routen von Datenpaketen in Ad Hoc Netzen. Die wichtigsten sind ein als Dynamic Source Routing (DSR) bezeichnetes dynamisches Pfadbestimmungsverfahren und AODV (Ad Hoc On Demand Distance Vector Routing). Beide sind reaktive Ansätze, die eine Paketvermittlung in mobilen Ad Hoc Netzen erlauben. Sowohl DSR als auch AODV benötigen keinerlei zusätzliche Infrastruktur für das Routing, sondern es genügen die teilnehmenden Terminals.

Wie der Name schon impliziert, nutzt DSR den Quellenpfad Ansatz (Source Routing). Dabei wird in allen Paketen die genaue Route, die ein Paket nutzt, gespeichert. Dies führt zu geringerem Aufwand zur Weiterleitung der Pakete, allerdings vergrößern sich die Pakete durch die gespeicherte Route.

AODV nutzt einen anderen Mechanismus. Jeder Knoten auf einer Route kennt nur seinen Vorgänger und seinen Nachfolger. Diese Information reicht aus, ein Paket von der Quelle zum Ziel zu leiten, ohne dass ein einziger Knoten die gesamte Route kennt. Dabei ist ein erhöhter Aufwand für das Weiterleiten nötig, weil Routentabellen in den einzelnen Knoten (Nodes) abgefragt werden müssen. Dafür ist kein zusätzlicher Routingoverhead nötig, um Pakete zu verschicken.

Das Versenden von Datenpaketen zwischen zufälligen Teilnehmern können beide Algorithmen gut erfüllen. Allerdings liegt bei einer Erweiterung der Abdeckung (Coverage) einer zellularen Basisstation keine Knoten zu Knoten (Node-to-Node) Kommunikation vor, sondern es ist die Basisstation immer ein Endpunkt der Kommunikation.

Der Erfindung liegt die Aufgabe zu Grunde, ein Verfahren und eine Basisstation der eingangs genannten Art aufzuzeigen, welche ein effizientes und den speziellen Bedingungen angepasstes Bestimmen des Übertragungspfades von einer Teilnehmerstation zu einer Basisstation zur Verfügung stellen.

Die Aufgabe wird für das Verfahren mit den Merkmalen des Anspruchs 1 und für die Basisstation mit den Merkmalen des Anspruchs 11 gelöst.

Vorteilhafte Ausgestaltung und Weiterbildungen sind Gegenstand der abhängigen Ansprüche.

Erfindungsgemäß werden in der mindestens einen Basisstation Verbindungsinformationen über den selbstorganisierenden Funknetzteil zur Bestimmung mindestens eines Übertragungspfades zur Übertragung von Informationen verwendet.

Die Erfindung basiert auf der Idee, die Bestimmung des Übertragungspfades in der Basisstation zu bündeln.

Mit Vorteil werden die Verbindungsinformationen über den selbstorganisierenden Funknetzteil (ADHOC) in der mindestens einen Basisstation (BS) zumindest zeitweise vorgehalten. In Abhängigkeit von bestimmbaren Bedingungen können Kriterien gewählt werden, wann welche Verbindungsinformationen über den selbstorganisierenden Funknetzteil nicht mehr gespeichert bleiben bzw. werden.

Die Verbindungsinformationen können Informationen zu der Assoziativität und/oder der Lastverteilung bezüglich der Verbindungen im selbstorganisierenden Funknetzteil umfassen. Bevorzugt werden sowohl Informationen zu der Assoziativität und/oder der Lastverteilung bezüglich der Verbindungen im selbstorganisierenden Funknetzteil betrachtet.

Durch die ungefähre Rotationssymmetrie der Lastverteilung um die Basisstation herum (zur Basisstation hin steigt die Last jedes einzelnen Links), entsteht ein erhöhter Verlust auf allen Links, falls keine Lastverteilung vorgenommen wird. Keiner der bekannten Ad Hoc Routing Algorithmen kann die angesprochene Lastverteilung leisten, weil sie ohne zentrale Signalisierung auskommen müssen.

In einer bevorzugten Ausführungsvariante der Erfindung gewinnt die mindestens eine Basisstation Verbindungsinformationen über den selbstorganisierenden Funknetzteil aus Daten im Kopfteil (Header) von Datenpaketen zur Anfrage eines Pfades zu der mindestens einen Basisstation.

Die Verbindungsinformationen können grundsätzlich Knoten basiert (node based) vorliegen. Besondere Vorteile ergeben sich trotz des vergleichsweise größeren Speicherbedarfs, wenn die Verbindungsinformationen, insbesondere die Daten im Kopfteil der Datenpakete zur Anfrage eines Pfades über den selbstorganisierenden Funknetzteil, verbindungsbasiert (link based) vorliegen. In diesem Fall können nämlich auch alternative Routen bestimmt werden, die nicht disjunkt sind.

Es können die Verbindungsinformationen, insbesondere die Daten im Kopfteil der Datenpakete zur Anfrage eines Pfades über den selbstorganisierenden Funknetzteil, Verbindungsdaten zu alternativen Pfaden umfassen.

Grundsätzlich kann die Pfadbestimmung und die Ausfallsicherheit der Übertragung dadurch wesentlich verbessert werden, dass die mindestens eine Basisstation mehrere Übertragungspfade zur Übertragung von Informationen bestimmt.

In Ausgestaltung der Erfindung kann zur Übertragung von Informationen von der Teilnehmerstation des selbstorganisierenden Funknetzteils als Informationsquelle an die mindestens eine Basisstation des zellularen Funknetzteils ein Routing Algorithmus mit folgenden Schritten verwendet werden:
a) die Teilnehmerstation (N1) sendet eine Anfrage zur Bestimmung mindestens eines Übertragungspfades,
b) jeder Knoten des selbstorganisierenden Funknetzteil, der diese Anfrage empfängt, trägt seine Adresse im Kopfteil des Anfragepakets ein und sendet das Anfragepaket nach einer Verweilzeit weiter,
c) mindestens ein empfangender Knoten des selbstorganisierenden Funknetzteils, welcher auch Teilnehmerstation des zellularen Funknetzteils ist, überträgt das Anfragepaket über das zellulare Funknetzteil an die mindestens eine Basisstation,
d) in der mindestens einen Basisstation wird unter Verwendung der Informationen zu der Assoziativität und/oder der Lastverteilung zu Verbindungen im selbstorganisierenden Funknetzteil mindestens ein Übertragungspfad zur Informationenübertragung an die mindestens eine Basisstatiön bestimmt,
e) von der mindestens einen Basisstation wird über mindestens einen der bestimmten Übertragungspfade an die Teilnehmerstation ein Verbindungsanfrageantwortpaket mit Angabe des mindestens einen Übertragungspfades übermittelt,
f) von der Teilnehmerstation wird an die mindestens eine Basisstation (BS) über den mindestens einen Übertragungspfad der bestimmten Übertragungspfade an die mindestens eine Basisstation (BS) übertragen.

Dieser Algorithmus bringt besondere Vorteile. Denn ein auf den hier betrachteten Fall der Übertragung von einer Teilnehmerstation im selbstorganisierenden Funknetz zu der Basisstation des zellularen Funknetzes hin optimierter Algorithmus, kann die Information besser nutzen als dies für die auch für allgemeine Fälle nutzbaren Protokolle der Ad Hoc Routing Algorithmen AODV oder DSR der Fall wäre. Weiterhin kann die Basisstation die Berechnungen von Pfäden sowie die Wartung von Routing Tabellen effizienter durchführen als dies bei einer Verteilung auf alle Teilnehmer möglich wäre.

Im Verbindungsanfrageantwortpaket (Route Reply Packet) nach Schritt e) kann für den Fall, dass nur ein einziger Übertragungspfad an die Quelle übertragen wird, dieser Pfad im Kopfteil (Header) des Verbindungsanfrageantwortpakets Knoten basiert angegeben sein. Eine eine größere Datenmenge umfassende Angabe auf Basis der Verbindungen (Link basiert) ist hier nicht erforderlich.

Bevorzugt wird in der mindestens einen Basisstation zur Bestimmung des mindestens einen Übertragungspfades der Dijkstra Algorithmus eingesetzt. Der Dijkstra Algorithmus dient allgemein zur Wegfindung zwischen einem Startknoten und einem Zielknoten in einem gegebenen zusammenhängenden Graphen. Kanten in diesem Graphen repräsentieren mögliche Verbindungen und sind nach der Weglänge gewichtet. Es wird vom Startknoten ausgehend der gesamte Graph erforscht und der kürzeste Weg zu dem Zielknoten in einer vollständigen Suche (Breitensuche) ermittelt.

Die Zahl der Flutungsübertragungen kann dadurch reduziert werden, dass jeder empfangende Knoten des selbstorganisierenden Funknetzteils, welcher auch Teilnehmerstation des zellularen Funknetzteils ist, das Anfragepaket ausschließlich über das zellulare Funknetzteil an die mindestens eine Bäsisstation überträgt.

Die erfindungsgemäße Basisstation gehört einem Funkkommunikationssystem an, welches zumindest einen zellulares Funknetzteil mit mindestens der Basisstation und einen zumindest teilweise selbstorganisierenden Funknetzteil umfasst, wobei die Informationen von einer Teilnehmerstation des selbstorganisierenden Funknetzteils an die Basisstation übertragen werden.

Erfindungsgemäß weist die Basisstation Mittel zur Bestimmung mindestens eines Übertragungspfades zur Übertragung von Informationen aus Verbindungsinformationen über den selbstorganisierenden Funknetzteil auf.

Es können außerdem Mittel zum zumindest zeitweise Vorhalten der Verbindungsinformationen über den selbstorganisierenden Funknetzteil vorgesehen sein.

Das erfindungsgemäße Funkkommunikationssystem umfasst mindestens eine Basisstation der oben beschriebenen Art.

Nachfolgend soll die Erfindung anhand von Figuren näher erläutert werden.

Hierbei zeigen:
- Fig. 1:: einen Ausschnitt einer schematisch auf zwei Routen beschränkten Netzwerktopologie,
- Fig. 2:: eine schematische Darstellung zu einer erfindungsgemäßen Übertragung von Information über einen selbstorganisierenden Teil eines Funkkommunikationsnetzes und einen zellularen Teil eines Funkkommunikationsnetzes eines Funkkommunikationssystems.

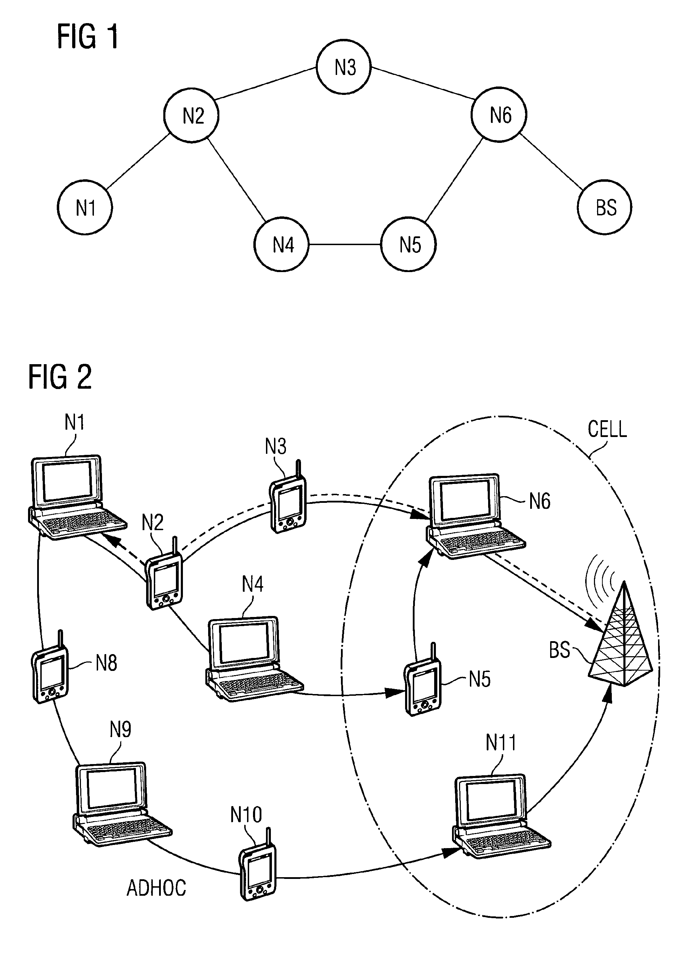

In Figur 1 ist ein Ausschnitt einer schematisch auf zwei Routen beschränkten Netzwerktopologie dargestellt. Dabei ist nicht die Netzstruktur des zellularen Funknetzteils gezeigt, sondern zwei nicht disjunkte Pfade für eine Übertragung von Information von dem im Beispiel als Quelle fungierenden Knoten N1 zur Basisstation BS. Im hier betrachteten Beispiel möchte ein Teilnehmer vom seiner als Netzknoten N1 dargestellten Teilnehmerstation Informationen an die Basisstationen BS eines in Figur 1 nicht dargestellten zellularen Funknetzes übermitteln. Dazu muss aber der Knoten N1 entweder einen Pfad zur Basisstation bereits kennen oder der Pfad muss ermittelt werden. Für den zweitgenannten Fall muss ein Routing Algorithmus verwendet werden.

Die vorliegende Erfindung betrifft eine Routenberechnung unter Nutzung der Basisstation. Dazu können grundsätzlich verschiedene geeignete Metriken zum Einsatz kommen. Es sind Methoden der Berechnung des kürzesten Pfades bekannt. Allerdings stellen die so ermittelten Pfade bei Multihop Ad Hoc Netzen nicht immer die sinnvollsten Pfade dar.

Der im Rahmen der Erfindung betrachtete Routing Algorithmus, welcher als Ad Hoc Routing for Cellular Coverage Extension (ARCE) Algorithmus bezeichnet werden kann, nutzt Zusatzinformationen, welche die Basisstation aus den eingehenden den sogenannten Route Requests, d.h. den Anfragen zur Bestimmung mindestens eines Übertragungspfades, generiert. Anhand der häufigen Route Requests von vielen Teilnehmern kann die Basisstation stabilere Routen erkennen, weil diese häufig im Source Routing Header des Request Paketes verzeichnet sind. Im Header des Request Paketes sind wie oben beschrieben alle Knoten (Nodes), über die das Paket läuft, verzeichnet. Hieraus lässt sich ein Verzeichnis aller genutzten Links zwischen den Knoten des selbstorganisierenden Funknetzteiles erstellen. Dieses Verzeichnis kann fortlaufend oder von Zeit zu Zeit aktualisiert werden. Die stabileren Links können nun genutzt werden, um statistisch langlebigere Routen zu generieren. Dies bedeutet eine wesentliche Erweiterung gegenüber einem Vorgehen, bei welchem nur die kürzesten Pfade verwendet werden. Deshalb kann das ARCE Protokoll mit Unterstützung der Basisstation eine insgesamt deutlich verbesserte Performance bewerkstelligen, als dies ein ad hoc Routing Protokoll vermag, welches ohne aktive Unterstützung der Basisstation auskommen muss.

Um alle oder zumindest mehrere Pfade bzw. Routen eines Route Requests in einem Paket abspeichern zu können, müssen einige Felder eines solchen Paketes verändert werden. Es genügt nicht mehr, dass nur der bisherige Pfad des Paketes darin vermerkt wird, sondern es müssen Verbindungen (Links) zwischen den Knoten gespeichert werden.

Eine Anfrage eines Pfades (Route Request), durchgeführt mit einem gewöhnlicher Flutungs (Flooding) Algorithmus, könnte im Beispiel der Figur 1 nur den Pfad N1 → N2 → N5 → N6 zur Basisstation BS finden. Der in Figur 1 ebenfalls vorhandene Ausweichpfad (N1 → N2 → N4→ N5 → N6) - etwa bedeutsam für den Fall, dass der Knoten N3 ausfällt, - über die Knoten N4 und N5 (statt über N3) würde verworfen, weil der Request von Knoten N5 nach dem ersten Request von Knoten N3 an Knoten N6 eintrifft.

Um die Vorteile der Angabe mehrere Pfade nutzen zu können, kann ein veränderter Request Header benutzt werden. Es findet dabei ein Wechsel von einer Knoten (Node) basierten Angabe auf eine Verbindungs (Link) basierte Angabe der Verbindungsinformationen im Kopfteil der Datenpakete zur Anfrage eines Pfades (Route Request) über einen selbstorganisierenden Funknetzteil statt. Der Header enthält nicht mehr nur die Angabe der Weiterleitungsknoten, über die der Request versendet wurde (siehe dazu z.B. DSR-Header), sondern die Links, über die der Request gesendet wurde. Ein Link kann beschrieben werden als Verbindung zwischen 2 Knoten, deshalb bilden immer 2 aufeinander folgende Adressen im Request einen Link. Der Header muss deshalb immer eine gerade Anzahl an Adressen enthalten. Bei einem Knoten basierten Pfad werden nur die Knoten in den Header aufgenommen, über die ein Paket weitergeleitet wird. Sowohl DSR als auch AODV basieren auf diesem Prinzip. Bei DSR wird der Pfad im Datenpaket vermerkt, bei AODV sind die jeweiligen weiterleitenden Knoten dafür verantwortlich, den nächsten Hop zu kennen. Im Gegensatz dazu wird ein Link basierter Pfad aus einzelnen Links zusammengesetzt. Für die Berechnung des kürzesten Pfades sind beide Ansätze äquivalent. Wenn mehrere Routen berechnet werden sollen, und diese nicht immer disjunkt sein müssen, ist ein Link basierter Ansatz unumgänglich.

Eine Knoten basierten Angabe der Verbindungen aus Figur 1 würde auf den kürzesten Pfad beschränkt sein und lauten: N1-N2 - N3 - N6. Eine Verbindungs basierte Angabe umfasst mehrere Links und lautet: N1-N2, N2-N3, N3-N6, N6-BS, N2-N4, N4-N5, N5-N6.

Ein einfaches Beispiel eines erfindungsgemäßen Funkkommunikationssystems ist in Figur 2 gezeigt. Im Bereich ADHOC befinden sich die Knoten N1, N2, N3, N4, N5, N6, N8, N9, N10 und N11, welche als Knoten in dem selbstorganisierenden Funknetzteil ADHOC wirken. Daneben ist in Figur 2 auch ein zellularer Funknetzteil CELL vorhanden. Dazu gehört eine Basisstation BS, deren Funkabdeckungsbereich (Zelle) durch einen Kreis angedeutet ist. In Bereich der Funkzelle der Basisstation BS befinden sich die Teilnehmerstationen N6, N5 und N11. Diese Teilnehmerstationen N6, N5 und N11 gehören als Knoten auch dem selbstorganisierenden Funknetzteil ADHOC des dargestellten Funkkommunikationssystems an. Die Teilnehmerstationen N6 und N11 sind im Funknetz - beispielsweise in ein UMTS Funkzelle - des zellularen Funknetzteils CELL angemeldet und befinden sich beispielsweise im IDLE Mode. Die Teilnehmerstation N5 befindet sich zwar in der Funkzelle, d.h. im Funkabdeckungsbereich der Basisstation BS, hat sich aber beispielsweise derzeit aus dem UMTS Funknetz abgemeldet oder besitzt keine entsprechenden Ausstattung, um über die Luftschnittstelle mit der Basisstation BS kommunizieren zu können. Dem zellularen Funknetzteil CELL könne im Beispiel also lediglich die Teilnehmerstationen N6 und N11 zugerechnet werden. Selbstverständlich können im zellularen Funknetzteil CELL auch Teilnehmerstationen (nicht gezeigt) vorhanden sein, die nicht als Knoten im selbstorganisierenden Funknetzteil ADHOC wirken oder wirken können.

In Figur 2 sind ausgehend von der Teilnehmerstation N1 als Knoten des selbstorganisierenden Funknetzteils ADHOC mehrere mögliche Pfade zur Basisstation gezeigt. Dies sind im einzelnen die Routen:
i) mit den Hops: N1 → N2 **→** N3 **→** N6
ii) mit den Hops: N1 → N2 → N4 **→** N5 **→** N6
iii) mit den Hops: N1 → N8 → N9 **→** N10 → N11.

Die Pfade i) und ii) entsprechen der Darstellung in Figur 1. Die Pfade i) und ii) sind jeweils disjunkt zum Pfad iii).

Im folgenden wird beispielhaft der Einsatz eines Routing Algorithmus nach der Erfindung mit Einsatz der Basisstation in Anlehnung an die Darstellung in Figur 2 aufgezeigt:

Eine Teilnehmerstation versucht sich über das UMTS Interface mit der Basisstation zu verbinden und wird geblockt oder ist außerhalb der Reichweite. Nach dem Erhalt einer entsprechenden Fehlermeldung verwendet die Teilnehmerstation nun den ARCE Algorithmus für das ad hoc Netz: Sie überprüft nun als erstes, ob nicht von zuvor weitergeleiteten Paketen ein Pfad zur Basisstation bekannt ist. Ist dies der Fall, nutzt die Quelle diesen Pfad sofort als Datenpfad. Ansonsten muss die Source vor einem Verbindungsaufbau einen Request auf der Suche nach dem Ziel durch das Netz fluten. Dieser enthält zunächst in der Regel nur die allgemeinen Daten, also beispielsweise ein TTL (time to life) Feld, die Quellenadresse und die Zieladresse und eine Anfrageindentifikationsinformation (Request ID). Außerdem wird noch die Source Adresse als erste Adresse des ersten Links eingetragen. Danach wird der Request an alle direkten Nachbar mit Hilfe eins Broadcasts (Rundsenderufs) verschickt.

Jeder Knoten, der diesen Request empfängt, trägt seine eigene Adresse als zweite Adresse des Links ein. Danach wartet der weiterleitende Knoten eine Zeit T_{w} auf mögliche weiter eintreffende Requests mit der selben Request ID und Source Adresse. Im Falle, dass während der Wartezeit T_{W} mehr als N Requests mit gleicher Request ID eintreffen, wird der Request schon vor dem Ablauf des Timers T_{W} weitergeleitet, ansonsten wird auf den Ablauf des Timers gewartet. Die maximale Anzahl an Requests N sollte so eingestellt werden, dass nur sinnvolle Pfade weitergeleitet werden, dies wird ebenfalls durch das TTL Feld begrenzt. Offensichtlich zu lange Pfade sollten nicht weitergeleitet werden, um keine Bandbreite zu verschwenden, weil jeder Link im Source Routing Header Bandbreite benötigt. Außerdem sollte die Wartezeit klein genug gewählt werden, um den Request nicht zu stark zu verzögern, und groß genug sein, um einige zusätzliche Pfade weiterleiten zu können. Noch vor Ablauf des Timers wird damit begonnen, ein neues Paket zu erstellen. Für das TTL Feld wird die größte empfange TTL-Zahl aus allen empfangenen Request-Paketen ausgesucht, um eins erniedrigt, und in das TTL-Feld des weiterzuleitenden Paketes geschrieben. Sollte das TTL Feld gleich Null oder kleiner sein, wird das gesamte Paket verworfen. Ansonsten wird das vollständige Paket erstellt, indem die Links des ersten Request Paketes in das neue Paket übertragen werden. Mehrfach erwähnte Links werden ausgefiltert und nur einmal in die neue Linkliste eingetragen. Danach werden bei jedem neu ankommenden Paket die darin enthaltenen Links mit den bereits in das neue Paket kopierten Links verglichen, und falls sie übereinstimmen, verworfen. Alle anderen Links müssen an das Ende des Paketes angehängt werden. Dabei spielt die Reihenfolge der Speicherung keine Rolle. Der in der Basisstation bevorzugt genutzte Dijkstra-Algorithmus wertet beispielsweise die Links unabhängig von ihrer Reihenfolge aus.

Teilnehmerstationen mit einer Verbindung zu einer Basisstation stoppen in der Regel das Fluten des Netzes, senden also das Paket über das ad hoc Interface nicht mehr weiter. Stattdessen wird der Request über das UMTS Interface an die Basisstation gesendet.

Innerhalb der Basisstation werden bevorzugt zwei Matrizen unabhängig verwaltet, nämlich eine Assoziativitätsmatrix und eine Lastverteilungsmatrix.

In der Assoziativitätsmatrix sind alle bekannten Links enthalten. Bei jedem in der Basisstation neu eintreffenden Paket werden für alle Links, über die das Paket weitergeleitet wurde, die dazugehörende Assoziativität in der Matrix der Basisstation erhöht. Dies ist unabhängig von der Art des Paketes, es werden sowohl Routing Pakete als auch Datenpakete berücksichtigt. Im Falle, dass innerhalb des aktuellen Prüfzeitraums schon eine Verbesserung der Linkmetrik stattgefunden hat, wird keine weitere Verbesserung vorgenommen, um die Assoziativität nicht durch die Anzahl an ankommenden Paketen zu verfälschen. Falls keine Pakete über einen Link eintreffen, wird dessen Assoziativität langsam erniedrigt, bis schließlich der gesamte Link aus der Tabelle gelöscht wird.

Der Maximalwert in der Metrik der Assoziativitätsmatrix ist beispielsweise auf drei festgelegt, der Minimalwert ist null. Dabei bedeutet drei, eine hohe Orts-Stabilität, wohingegen Null eine sehr schlechte Assoziativität widerspiegelt. Wenn ein Link während eines Zeitabschnitts nicht genutzt wird, und die Metrik schon Null enthält, wird der gesamte Link aus der Matrix herausgenommen. Für einen bisher nicht bekannten Link wird eine Assoziativitätsmatrix von eins angenommen. Im Falle dass die Basisstation ein Route Error Paket erhält, wird der darin als fehlerhaft bezeichnete Link sofort aus der Assoziativitätsmatrix herausgenommen.

Die zweite Metrik ist die der Lastverteilung (Load). Die Last eines Links wird in Pakete pro Zeiteinheit gemessen. Falls ein Link viele Pakete weiterleitet, erhält dieser Link in der Lastverteilungsmatrix einen Wert von 3 (full load), ohne Last ist der Wert null (no load).

Die Lastmetrik ist nicht unabhängig von der Assoziativität. Je konstanter ein Link für Datenverkehr genutzt wird, umso höher ist natürlich auch dessen Assoziativität, weil diese anhand der eintreffenden Pakete gemessen wird. Weiterhin gilt, dass die Anzahl der Einträge der Assoziativitätsmatrix immer größer sein muss als die Anzahl der Einträge in der Lastverteilungsmatrix, die Lastverteilungsmatrix also eine Untermenge der Assoziativitätsmatrix sein muss. Nach dem ersten Empfang eines Route Requests durch die Basisstation, wird noch einmal eine Zeit T_{W-B} gewartet, um noch weitere, über andere Routen gesendete, Requests auswerten zu können. Nach Ablauf des Timers werden alle bis dahin empfangenen Requests ausgewertet und neue Links in die Assoziativitätsmatrix eingetragen. Anhand der Lasten und der Assoziativitäten werden nun Routen von der Basisstation zur Source berechnet. Aus den Einzelwerten eines Links wird mit Hilfe einer Funktion - abhängig von der Assoziativität und Lastverteilung - eine Kantengewichtung berechnet. Mit Hilfe des Dijkstra Algorithmus kann nun der Shortest Path zurück zur Source berechnet werden. Um nun allerdings nicht optimale, längere Pfade als Ausweichsrouten berechnen zu können, genügt es nicht die beim kürzesten Pfad (Shortest Path) genutzten Pfade zu löschen. Dies führt unter Umständen zu dem Ergebnis, dass keine weitere Route erkannt wird, weil z.B. der letzte Link zurück zur Source nicht redundant vorhanden ist (siehe Figur 1 : Link N5⇔N6).

Um den Ausweichpfad über die Knoten N4 und N5 berechnen zu können, werden beispielsweise die Kantengewichtungen des kürzesten Pfades jeweils um eins erhöht. Dadurch ergibt sich eine neue Netzwerktopologie, ohne jedoch Links völlig auszuschließen. Wenn ein zweiter Pfad gefunden wird, wird auch dieser gespeichert, und dessen Kantengewichte erhöht. Danach wird wieder der Dijkstra Algorithmus angewandt. Ferner wird ein Abbruchkriterium vorgegeben. Die ganze Prozedur wird beispielsweise so lange wiederholt, bis die Basisstation Rₘₐₓ Routen zur Source berechnet hat oder eine der bisher berechneten Routen zum dritten Mal neu berechnet worden ist. Die veränderten Kantengewichte werden danach wieder auf ihren ursprünglichen Wert zurückgesetzt. Durch diese Berechnungsmethode werden die Routen nicht in ihrer optimalen Reihenfolge berechnet, sondern eher zufällig. Um der Source die Routen in einer sinnvollen Reihenfolge zu übermitteln, werden diese noch einmal anhand der beiden Metriken sortiert.

Das Route Reply Paket wird nun über die primäre Route zurück zur Source gesendet. Nach Erhalt des Reply Paketes kann die Source sofort mit der Datenübertragung beginnen, für den Fall, dass nur eine Basisstation erreicht wurde. Im Falle, dass mehrere Basisstationen den Route Request erhalten haben, ist ein Erhalt mehrerer Route Reply Pakete von unterschiedlichen Basisstationen möglich, und die Source muss noch einmal die für sie günstigste Route berechnen. Allerdings erhält sie weitere Pfade zu einer Basisstation, die mit hoher Wahrscheinlichkeit auch völlig disjunkt sind.

Mit der Erfindung sind auch neben den bereits erwähnten folgende Vorteile verbunden:
- die Basisstation steuert die Source Node; immer wenn neuere Informationen über Routen vorhanden sind, werden diese der Source mitgeteilt,
- der Cache innerhalb der Source Node kann ausgeschaltet werden, wenn die Basisstation die volle Kontrolle für die Routenbestimmung übernimmt (Kontrolle, ob Pfade noch vorhanden),
- die Anzahl der in der Source gespeicherten Routen wird von der Basisstation gesteuert, z.B. werden bei schneller Topologie- Änderung wenige Alternativrouten generiert (schnelles Brechen der Links), während bei wenigen Veränderungen viele Routen generiert werden können, weil diese im Schnitt länger halten.

## Patentansprüche

1. Verfahren zur Übertragung von Informationen in einem Funkkommunikationssystem umfassend zumindest ein zellulares Funknetzteil (CELL) mit mindestens einer Basisstation (BS) und ein zumindest teilweise selbstorganisierendes Funknetzteil (ADHOC),
wobei die Informationen von einer Teilnehmerstation (N1) des selbstorganisierenden Funknetzteils an die mindestens eine Basisstation (BS) des zellularen Funknetzteils (CELL) übertragen werden,
**dadurch gekennzeichnet,**
**dass** in der mindestens einen Basisstation (BS) Verbindungsinformationen über den selbstorganisierenden Funknetzteil (ADHOC) zur Bestimmung mindestens eines Übertragungspfades zur Übertragung von Informationen verwendet werden.

2. Verfahren nach Anspruch 1,
**dadurch gekennzeichnet,**
**dass** die Verbindungsinformationen über den selbstorganisierenden Funknetzteil (ADHOC) in der mindestens einen Basisstation (BS) zumindest zeitweise vorgehalten werden.

3. Verfahren nach Anspruch 1 oder 2,
**dadurch gekennzeichnet,**
**dass** die Verbindungsinformationen Informationen zu der Assoziativität und/oder der Lastverteilung zu Verbindungen im selbstorganisierenden Funknetzteil (ADHOC) umfassen.

4. Verfahren nach einem der Ansprüche 1 bis 3,
**dadurch gekennzeichnet,**
**dass** die mindestens eine Basisstation (BS) Verbindungsinformationen über den selbstorganisierenden Funknetzteil (ADHOC) aus Daten im Kopfteil von Datenpaketen zur Anfrage eines Pfades zu der mindestens einen Basisstation (BS) gewinnt.

5. Verfahren nach einem der Ansprüche 1 bis 4,
**dadurch gekennzeichnet,**
**dass** die Verbindungsinformationen, insbesondere die Daten im Kopfteil der Datenpakete zur Anfrage eines Pfades über den selbstorganisierenden Funknetzteil (ADHOC), verbindungsbasiert vorliegen.

6. Verfahren nach einem der Ansprüche 1 bis 5,
**dadurch gekennzeichnet,**
**dass** die Verbindungsinformationen, insbesondere die Daten im Kopfteil der Datenpakete zur Anfrage eines Pfades über den selbstorganisierenden Funknetzteil (ADHOC), Verbindungsdaten zu alternativen Pfaden umfassen.

7. Verfahren nach einem der Ansprüche 1 bis 6,
**dadurch gekennzeichnet,**
**dass** die mindestens eine Basisstatiön (BS) mehrere Übertragungspfade zur Übertragung von Informationen bestimmt.

8. Verfahren nach einem der Ansprüche 1 bis 7,
**dadurch gekennzeichnet,**
**dass** zur Übertragung von Informationen von der Teilnehmerstation (N1) des selbstorganisierenden Funknetzteils als Informationsquelle an die mindestens eine Basisstation (BS) des zellularen Funknetzteils ein Routing Algorithmus mit folgenden Schritten verwendet wird:
a) die Teilnehmerstation (N1) sendet eine Anfrage zur Bestimmung mindestens eines Übertragungspfades,
b) jeder Knoten (N2, N3, N4, N5, N6, N8, N9, N10, N11) des selbstorganisierenden Funknetzteil (ADHOC), der diese Anfrage empfängt, trägt seine Adresse im Kopfteil des Anfragepakets ein und sendet das Anfragepaket nach einer Verweilzeit weiter,
c) mindestens ein empfangender Knoten (N5, N6, N11) des selbstorganisierenden Funknetzteils (ADHOC), welcher auch Teilnehmerstation des zellularen Funknetzteils (CELL) ist, überträgt das Anfragepaket über das zellulare Funknetzteil (CELL) an die mindestens eine Basisstation (BS),
d) in der mindestens einen Basisstation (BS) wird unter Verwendung der Informationen zu der Assoziativität und/oder der Lastverteilung zu Verbindungen im selbstorganisierenden Funknetzteil (ADHOC) mindestens ein Übertragungspfad zur Informationenübertragung an die mindestens eine Basisstation (BS) bestimmt,
e) von der mindestens einen Basisstation (BS) wird über mindestens einen der bestimmten Übertragungspfade an die Teilnehmerstation (N1) ein Verbindungsanfrageantwortpaket mit Angabe des mindestens einen Übertragungspfades übermittelt,
f) von der Teilnehmerstation (N1) wird an die mindestens eine Basisstation (BS) über den mindestens einen Übertragungspfad der bestimmten Übertragungspfade an die mindestens eine Basisstation (BS) übertragen.

9. Verfahren nach Anspruch 8,
**dadurch gekennzeichnet,**
**dass** in der mindestens einen Basisstation (BS) zur Bestimmung des mindestens einen Übertragungspfades der Dijkstra Algorithmus eingesetzt wird.

10. Verfahren nach Anspruch 8 oder 9,
**dadurch gekennzeichnet,**
**dass** jeder empfangende Knoten (N5, N6, N11) des selbstorganisierenden Funknetzteils (ADHOC), welcher auch Teilnehmerstation des zellularen Funknetzteils (CELL) ist, das Anfragepaket ausschließlich über das zellulare Funknetzteil (CELL) an die mindestens eine Basisstation (BS) überträgt.

11. Basisstation (BS) in einem Funkkommunikationssystem umfassend zumindest ein zellularen Funknetzteil (CELL) mit mindestens der Basisstation (BS) und einen zumindest teilweise selbstorganisierenden Funknetzteil (ADHOC),
wobei die Informationen von einer Teilnehmerstation (N1) des selbstorganisierenden Funknetzteils an die Basisstation (BS) übertragen werden,
**dadurch gekennzeichnet,**
**dass** die Basisstation (BS) Mittel zur Bestimmung mindestens eines Übertragungspfades zur Übertragung von Informationen aus Verbindungsinformationen über den selbstorganisierenden Funknetzteil (ADHOC) aufweist.

12. Basisstation (BS) nach Anspruch 11,
**dadurch gekennzeichnet,**
**dass** Mittel zum zumindest zeitweise Vorhalten der Verbindungsinformationen über den selbstorganisierenden Funknetzteil (ADHOC) vorgesehen sind.

13. Funkkommunikationssystem mit mindestens einer Basisstation (BS) nach Anspruch 11 oder 12.
